(19) Europäisches Patentamt
European Patent Office
Office européen des brevets

(11) EP 0 559 626 B1

(12) EUROPEAN PATENT SPECIFICATION

(45) Date of publication and mention
of the grant of the patent:
**05.02.1997 Bulletin 1997/06**

(51) Int Cl.⁶: **F16H 1/46**, F16H 1/28

(21) Application number: **93830084.5**

(22) Date of filing: **01.03.1993**

(54) **Planetary reduction unit**

Planeten-Untersetzungsgetriebe

Réducteur planétaire

(84) Designated Contracting States:
**CH DE ES FR GB GR IT LI**

(30) Priority: **04.03.1992 IT PD920032**

(43) Date of publication of application:
**08.09.1993 Bulletin 1993/36**

(73) Proprietor: **Gallocchio, Vanni**
**I-35036 Montegrotto Terme PD (IT)**

(72) Inventor: **Gallocchio, Vanni**
**I-35036 Montegrotto Terme PD (IT)**

(74) Representative: **Alagem Modiano, Lara S. et al**
**c/o Modiano & Associati S.r.l.,**
**Via Meravigli 16**
**20123 Milano (IT)**

(56) References cited:
EP-A- 0 319 393    DE-A- 1 960 503
FR-A- 1 073 194    US-A- 2 745 298
US-A- 3 675 510    US-A- 5 078 665

• DATABASE WPIL Section PQ, Week 8845, 9
November 1988 Derwent Publications Ltd.,
London, GB; Class Q, & EP-A-O 290 309 (Cousin
Freres ) 9 November 1988

Remarks:
The file contains technical information submitted
after the application was filed and not included in this
specification

## Description

The present invention is related to a speed reduction unit as defined in the preamble of claim 1. Such a speed reduction unit is known from FR-A-1073134 or from US-A-3675510.

Known are in the art of drive transmission between rotating shafts, several types of speed reduction units: gear trains, the reduction ratio of which is given by the ratio between the number of teeth of the first gear wheel and the number of teeth of the last gear wheel, or, in case very high reduction ratios are needed, worm screw - helical gear systems wherein the transmission ratio is given by the number of the screw starts and the number of the gear teeth.

Other known reduction units are of the planetary gear type, constituted by gear wheels supported by movable axis rotating around a main axis, named as gearing axis. A typical planetary gearing comprises a sun gear, disposed centrally and kinematically connected to an outer crown wheel by means of planet wheels having the same diameter, angularly equally spaced apart from one another around the gearing axis and rotatably carried by a planet carrier.

A particular planetary reduction gear, adapted to provide an extremely high reduction ratio, is known from EP-A-0319393. It comprises two planetary gearings coaxially associated with each other and including respectively:

- a first sun wheel rigidly connected for rotation to an input shaft and with which first planet wheels are meshing, which in turn are meshing with a first outer ring gear,
- a second sun wheel having a diameter different from that of the first sun wheel and with which second planetary gears are meshing, having a different diameter from that of the first planetary gears and which in turn are meshing with a second outer ring gear rigid for rotation with an output shaft and having an inner diameter different from that of the first ring gear, and wherein each first planetary is rigid for rotation with a respective second planetary gear, so as to define double planetary gears.

In this known reduction unit, wherein the two planetary trains are made by toothed gears, the double planetary gears are connected to a central planet carrier. Such a planet carrier and the second sun gear are provided with respective elastic systems whose function is to suppress in operation any play between the toothed matings, maintaining the machining tolerances thereof within realistic terms.

This known solution has a complex construction, requires the use of a huge amount of components of which the elastic ones are subject to failure risks, and its operation is as a consequence delicate and barely reliable.

A further drawback of this known reduction unit, wherein the difference of diameters of the gears of the two planetary gearings is performed differentiating the number of teeth thereof, resides in that it has excessive overall dimensions in connection with applications adapted to reduce the outlet speed of small d.c. motors (around 8000 RPM). As a matter of fact these small d. c. motors are generally employed for displacement of devices in extremely small available space.

US-A-5078665 teaches a reduction unit comprising a sun gear, integral with the driving shaft, and provided with two toothings which mesh with three free planetary gears which in turn mesh with the fixed and rotary ring gears; between these ring gears there is a difference of three teeth.

A further object of the invention is to provide a reduction unit which is compact and constituted by a reduced number of components.

Still another object of the invention is to provide a reduction unit which can be manufactured in a relatively simple and economical way and has a safe and reliable operation life.

These objects are achieved, according to the invention, as defined in the appended claim.

In other words, the speed reduction unit according to the invention has no planet carrier for the mutual constraint of the planetary gears, which are therefore free between the sun wheels and the outer ring wheels, and is thus constituted by an essential number of components not requiring any elastic device for the possible taking up of plays, which appreciably simplify the manufacture and makes operation remarkably more reliable.

The two planetary wheelworks can be made by toothed wheels, or by friction wheels, or even both by toothed and friction wheels.

Further characteristics and advantages of the invention will become apparent from the following detailed description of some embodiments thereof illustrated by way of non limiting example in the annexed drawings, wherein:

figure 1 is a diagrammatic and axially sectioned view af a first embodiment of the speed reduction unit of the invention,
figure 2 is a cross section along line II-II of figure 1,
figure 3 is an exploded perspective and partially sectioned view of figure 1,
figure 4 is a view analogous to figure 3 with the reduction unit partially assembled, and
figure 5 is a diagram relating to the reduction ratio which can be obtained with the reduction unit according to the invention.

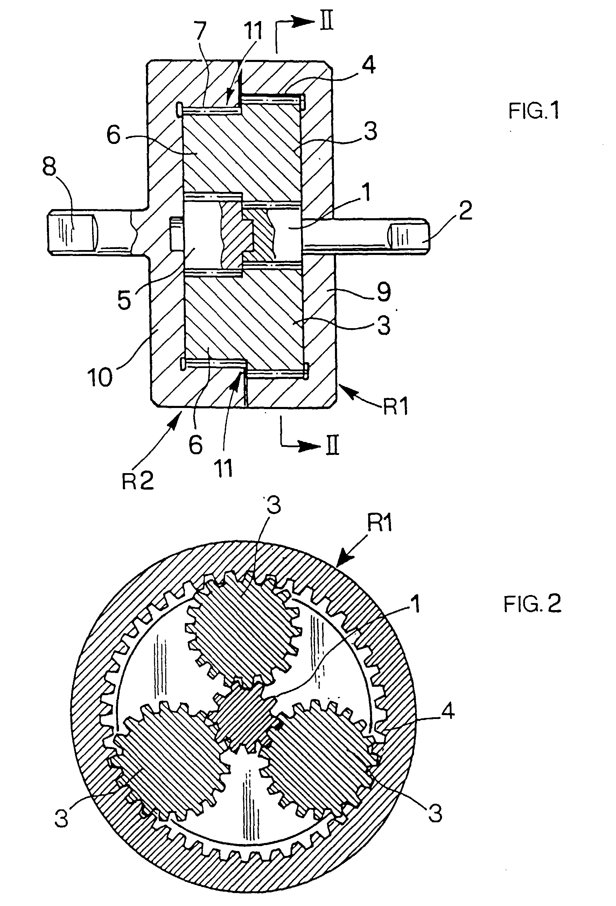

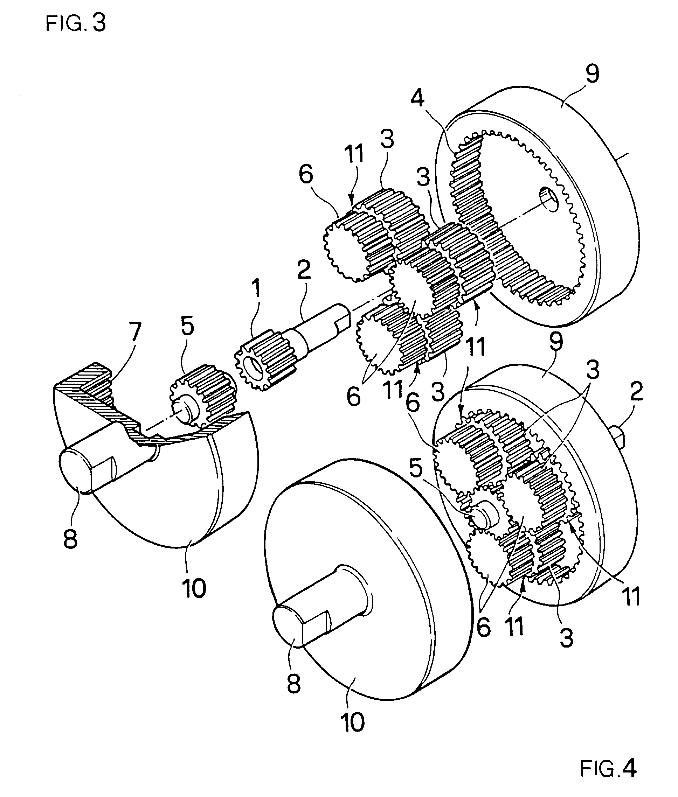

Referring initially to figures 1 through 4, a speed reduction unit according to a preferred embodiment of the invention comprises two planetary gearings R1, R2 coaxially associated with each other and costituted by toothed wheels.

The first planetary gearing R1 comprises a first sun gear 1 on which first planetary gears are in mesh, which in turn are meshing with a first outer innerly toothed ring gear 4. The first planetary gears 3, the number of which can be two, three ( as in illustrated examples) or more, have the same diameter.

Likewise, the second planetary gearing R2 is constituted by a second sun wheel 5 with which second planetary wheels 6 are in mesh, whose number is same as that of the first planetary gears 3 and which in turn are meshing with a second outer innerly toothed ring gear 7.

The first sun gear 1 is rigid for rotation with an inlet shaft 2, for instance intended to be coupled to the output shaft of an electric d.c. motor, and which rotatably extends through a radial end piece 9 integrally formed with the first ring gear 4.

The second ring gear 7 is integrally formed with a radial end piece 10 opposed to the end piece 9 and provided with an outer appendage coaxial with the inlet shaft 2, defining an outlet shaft 8.

The first planetary gears 3 have, in the illustrated example, a diameter which is greater than that of the second planetary gears 6, while the first sun gear 1 has a diameter which is smaller than that of the second sun gear 5. Consequently, the diameter of the first ring gear 4 is greater than the diameter of the second ring gear 7.

Each first planetary gear 3 is coaxially formed in one piece with a respective second planetary gear 6, so as to define double planetary gears 11, which according to the invention are autonomous with respect to one another, i.e. are unprovided with a planet carrier.

The second sun gear 5, which simply has a support function for maintaining the double planet gears 11 in their position of angular equidistance, is carried in a freely rotatable way on one side by the first sun gear 1, and on the other side by the end piece 10.

The mathematical formula of the reduction ratio of the speed reduction unit is the following:

$$R = \frac{d_1^2 (d_1 - d_0) - D (d_1^2 + d_0 d_1)}{D (d_0^2 + d_0 d_1)}$$

wherein:

R = reduction ratio
$d_0$ = diameter of the first sun gear 1
$d_1$ = diameter of the first ring gear 4
$D = d_1 - d_2$, wherein $d_2$ = diameter of the second ring gear 7

A practical example of the reduction unit according to the invention can be carried out with gears having the following number of teeth:

| first sun gear 1: | Z=9 |
|---|---|

(continued)

| first planetary gears 3: | Z=24 |
|---|---|
| first ring gear 4: | Z=57 |
| second sun gear 5: | Z=10 |
| second planetary gears 6: | Z=23 |
| second ring gear 7: | Z=56 |

Considering that the pitch diameter of the gears is related to the number of teeth by the relationship

$$d = Z \times M$$

wherein M is the teeth module,
with the same module, substituting in the formula of the reduction ratio the number of teeth to the diameters of the gears, a ratio of 1:256 is obtained, with the difference of one tooth of same module between the omologous gears of the two planetary gearings.

Another example, using gears with different modules, is the following:

| first sun gear 1: | Z=10 | M=1 |
|---|---|---|
| first planetary gears 3: | Z=12 | " |
| first ring gear 4: | Z=34 | " |
| second sun gear 5: | Z=9 | M=1.1 |
| second planetary gears 6: | Z=11 | " |
| second ring gear 7: | Z=31 | " |

In this case the difference D between the diameter $d_1$ of the first ring gear 4 and the diameter $d_2$ of the second ring gear 7 is equal to $(34 \times 1) - (31 \times 1.1) = 0.1$. This value, inserted in the preceeding formula leeds to a reduction ratio R of the reduction unit equal to 1:630 with a number of teeth lower than that of the first example, thus allowing, under the same overall dimensions and same reduction ratio, greater tooth dimensions and consequently a more sturdy construction of the reduction unit.

It is evident that decreasing the difference between the diameters of the gears, remarkable reduction ratios can be obtained, whose limit is a null difference between the diameter of the two ring gears 4 and 7, corresponding to an infinite reduction ratio since in this case the second ring gear 7 would remain stationary.

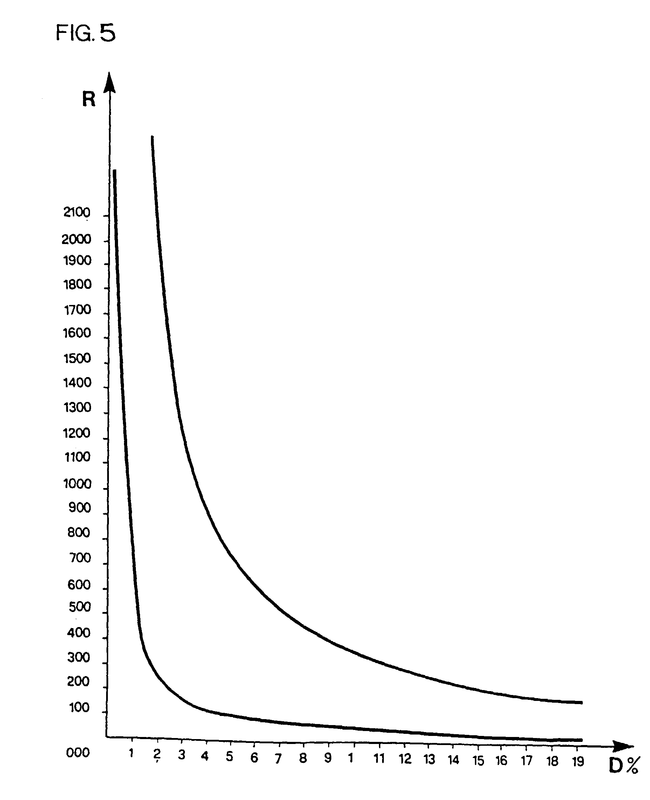

Figure 5 shows a diagram wherein the reduction ratio R is a function of the percentage difference D% between the two ring gears 4, 7, referred to the first sun gear 1, for two different module ratios of the two-stage gearings. It evidently resulted how the speed reduction unit according to the invention can lead to extremely noticeable reduction ratios with a simple and compact construction.

## Claims

1. Speed reduction unit comprising two planetary wheelworks (R1, R2) coaxially associated with each other and comprising respectively:

   - a first sun gear (1) rigid for rotation with a first input shaft (2) and with which first planetary gears (3) are mating, which in turn mate with a first outer ring gear (4),
   - a second sun gear (5) having a diameter different from that of the first sun gear (1) and with which second planetary gears (6) are mating, having a diameter different from that of the first planetary gears (3) and in turn mating with a second outer ring gear (7) rigid for rotation with an output shaft (8) and having an inner diameter different from that of the first ring gear (4),

   and wherein each first planetary gear (3) is rigid for rotation with a respective second planetary gear (6), so as to define double planetary gears (11) which are without a planet carrier, characterized in that said two planetary wheelworks (R1, R2) are constituted by gears (1, 3, 4; 5, 6, 7), the differences of diameters between all of said gears (1, 5; 3, 6; 4, 7) being obtained differentiating the module of the respective teeth.

## Patentansprüche

1. Reduziergetriebe, umfassend zwei koaxial zueinander angeordnete Planetengetriebe (R1, R2) mit:

   - einem ersten Sonnenrad (1), das drehfest mit einer ersten Antriebswelle (2) verbunden ist und mit ersten Planetenrädern (3) in Eingriff steht, die ihrerseits mit einem ersten Hohlrad (4) in Eingriff stehen, und

   - einem zweiten Sonnenrad (5), das einen anderen Durchmesser als das erste Sonnenrad (1) hat und mit zweiten planetenrädern (6) in Eingriff steht, die einen anderen Durchmesser als die ersten Planetenräder (3) haben und ihrerseits mit einem zweiten Hohlrad (7) in Eingriff stehen, das drehfest mit einer Abtriebswelle (8) verbunden ist und einen anderen Innendurchmesser hat als das erste Hohlrad (4),

   wobei jedes der ersten Planetenräder (3) drehfest mit einem jeweiligen zweiten Planetenrad (6) verbunden ist, um so Doppelplanetenräder (11) zu bilden, die keinen Planetenradträger haben, dadurch **gekennzeichnet,** daß die beiden Planetengetriebe (R1, R2) aus Zahnrädern (1, 3, 4;.5, 6, 7) gebildet sind, wobei die Durchmesser-Unterschiede zwischen all diesen Zahnrädern (1, 5, 3, 6; 4, 7) erzielt werden, indem man die Zahnmoduln verschieden macht.

## Revendications

1. Démultiplicateur de vitesses comprenant deux ensembles de roues planétaires (R1,R2) associés coaxialement l'un à l'autre et comprenant respectivement :

   - un premier pignon planétaire (1) lié en rotation à un premier arbre d'entrée (2) et avec lequel coopèrent des premiers pignons satellites (3) lesquels, à leur tour, coopèrent avec une première couronne dentée externe (4) ;
   - un second pignon planétaire (5) ayant un diamètre différent de celui du premier pignon planétaire (1) et avec lequel coopèrent des seconds pignons satellites (6) ayant un diamètre différent de celui des premiers pignons satellites (3) et, à leur tour, coopérant avec une seconde couronne dentée externe (7) liée en rotation à un arbre de sortie (8) et présentant un diamètre interne différent de celui de la première couronne dentée (4),

   et dans lequel chaque premier pignon satellite (3) est lié en rotation à un second pignon satellite respectif (6), afin de définir des pignons satellites doubles (11) qui sont dépourvus de porte-satellite, caractérisé en ce que les deux dits ensembles de roues planétaires (R1,R2) sont constitues par des pignons (1,3,4;5,6,7), les différences de diamètres entre tous lesdits pignons (1,5;3,6;4,7) étant obtenues en différenciant le module des dents respectives.

FIG.1

FIG.2

FIG. 3

FIG.4

FIG. 5